# EUROPEAN PATENT SPECIFICATION

(11) **EP 2 293 210 B1**
(45) Date of publication and mention of the grant of the patent: **11.03.2020**
(21) Application number: 10174239.3
(22) Date of filing: 27.08.2010
(51) Int. Cl.: G06F 21/10, H04N 1/00, H04N 1/44

(54) **Image forming apparatus, license processing method, and recording medium embodied with license processing program**
Bilderzeugungsvorrichtung, Lizenzverarbeitungsverfahren und Aufzeichnungsmedium mit darauf gespeichertem Lizenzverarbeitungsprogramm
Appareil de formation d'images, procédé de traitement de licence, et support d'enregistrement intégré avec le programme de traitement de licence

(30) Priority: 03.09.2009 JP 2009203929
(43) Date of publication of application: 09.03.2011
(73) Proprietor: Ricoh Company, Ltd., Tokyo 143-8555 (JP)
(72) Inventor: Ikawa, Taku, Tokyo 143-8555 (JP); Nagumo, Taku, Tokyo 143-8555 (JP); Hirokawa, Tomoya, Tokyo 143-8555 (JP); Sugiura, Yuuko, Tokyo 143-8555 (JP)
(74) Representative: SSM Sandmair

(56) References cited:
- WO-A1-2008/115647
- US-A1- 2004 158 712
- US-A1- 2008 005 029

## Description

### BACKGROUND OF THE INVENTION

### 1. Field of the Invention

The present invention relates to an image forming apparatus, a license processing method, and a recording medium embodied with a license processing program.

### 2. Description of the Related Art

An example of image forming apparatuses such as multifunction peripherals accepts installing of new programs developed after shipment of the example of the image forming apparatuses. It is convenient for a user to be provided with a license for installing the program or a license for using the program apart from the program itself. These licenses are also beneficial for sellers of the programs because these licenses may expand business opportunities.

However, it is difficult to introduce licenses for each of the corresponding image forming apparatuses under a user environment where many image forming apparatuses are used. Therefore, Patent Document 1 discloses a technique of collectively introducing licenses of applications into plural image forming apparatuses.

However, there may be a case where software architectures of application platforms of image forming apparatuses are fundamentally reviewed in response to changes of the hardware structures of the image forming apparatuses, and application platforms having new structures may be developed. In this case, managing methods of applications and licenses in the new application platforms may be drastically changed. Specifically, package types and license file types may be drastically changed.

When the new image forming apparatuses having the new application platforms are launched into markets, it is difficult to replace all image forming apparatuses which are already installed in offices by the new image forming apparatuses from a same point in time. Accordingly, there may be an environment in which the old image forming apparatuses and the new image forming apparatuses are mixed and simultaneously exist.

Under such an environment, the users are required to be aware of differences of methods of managing the licenses for each of the old image forming apparatuses and the new image forming apparatuses. As a result, users are required to select the managing methods corresponding to the image forming apparatuses in installing applications and licenses for each image forming apparatus. Such a situation causes a burden for the users and also a disincentive in replacing the old image forming apparatus with the new image forming apparatus.

Patent Document 1: Japanese Laid-Open Patent Application No. 2008-243179
US 2008/0005029 A1 discloses an image forming apparatus to which a program can be additionally provided. The image forming apparatus includes an activation determining unit configured to receive, via a communication network, usage permission data that is associated with program identification information unique to each program and device identification information unique to each image forming apparatus.

US 2004/0158712 A1 discloses a system for managing multimedia contents in an intranet, comprising a server for converting multimedia contents received through the internet into multimedia contents having a format suitable for at least one client of the intranet and transmitting the converted multimedia contents to the client. The server may translate a license received through the internet to be suitable for the client of the intranet and additionally transmits the translated license to the client.

### SUMMARY OF THE INVENTION

Accordingly, embodiments of the present invention may provide a novel and useful image forming apparatus, license processing method, and recording medium storing a license processing program solving one or more of the problems discussed above.

More specifically, the embodiments of the present invention may provide an image forming apparatus, license processing method, and recording medium storing a license processing program which can simplify work related to license management under an environment in which image forming apparatuses correspond to plural license managing methods.

One aspect of the embodiments of the present invention may be to provide an image forming apparatus including a plurality of license communication control units configured to receive requests for setting license data having different license managing types, a plurality of license managing units configured to decode the license data and set licenses by enabling to use the license data, and a license management integrating unit configured to select one of the plurality of license managing units in which the license corresponding to the request for setting the license data is set depending on one of the plurality of license communication control units which receives the request for setting the license data.

Additional objects and advantages of the embodiments will be set forth in part in the description which follows, and in part will be obvious from the description, or may be learned by practice of the invention. Objects and advantages of the invention will be realized and attained by means of the elements and combinations particularly pointed out in the appended claims. It is to be understood that both the foregoing general description and the following detailed description are exemplary and explanatory only and are not restrictive of the invention as claimed.

### BRIEF DESCRIPTION OF THE DRAWINGS

FIG. 1 illustrates a system configuration of an apparatus managing system of an embodiment.
FIG. 2 illustrates the hardware configuration of an image forming apparatus of the embodiment.
FIG. 3 illustrates a relationship among various servers and apparatuses in different license managing methods.
FIG. 4 illustrates an example functional configuration of an image forming apparatus 20A.
FIG. 5 is a sequence diagram for illustrating a procedure of setting a license in an image forming apparatus.
FIG. 6 is a structural example of a license managing table.
FIG. 7 illustrates a structural example of a license file.
FIG. 8 is a sequence diagram of installing an application with a license managing method B.
FIG. 9 is a flowchart of installing an application B with the image forming apparatus 20A.
FIG. 10 illustrates a structural example of a package type A.
FIG. 11 illustrates a structural example of an an application information file.
FIG. 12 is a flowchart for setting a license in an image forming apparatus20A.
FIG. 13 is a flowchart for invoking an application in the image forming apparatus 20A.

### DETAILED DESCRIPTION OF THE PREFERRED EMBODIMENTS

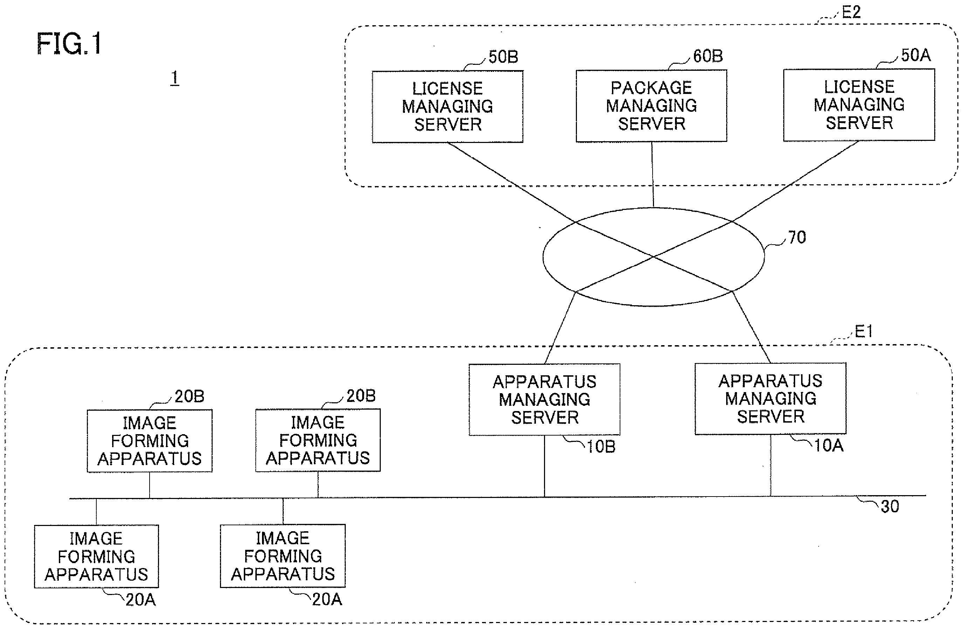

A description is given below, with reference to the FIG. 1 through FIG. 13 of an embodiment of the present invention. Reference symbols typically designate as follows:
- 10A, 10B:: Apparatus managing server;
- 20A, 20B:: Image forming apparatus;
- 50A, 50B:: License managing server;
- 60B:: Package managing server;
- 21:: Controller;
- 22:: Scanner;
- 23:: Printer;
- 24:: Modem;
- 25:: Operation panel;
- 26:: Network interface;
- 27:: SD card slot;
- 80:: SD card;
- 211:: CPU;
- 212:: RAM;
- 213:: ROM;
- 214:: HDD;
- 215:: Operation panel;
- 221A:: License communication control unit;
- 221B:: License communication control unit;
- 222A:: License managing unit;
- 222B:: License managing unit;
- 223:: License management integrating unit;
- 224:: Package converting unit;
- 225:: A-Method installing unit; and
- 226:: Operation controlling unit.

FIG. 1 illustrates a system configuration of an apparatus managing system of an embodiment. Referring to FIG. 1, the apparatus managing system 1 includes a user environment E1 which is a system environment for users of image forming apparatuses 20. For example, the user environment E1 corresponds to an enterprise or an office to which the users belong.

In the user environment E1, an apparatus managing server 10A, an apparatus managing server 10B, image forming apparatuses 20A, image forming apparatuses 20B, and the like are connected via a wired or wireless network 30 such as a local area network (LAN). The image forming apparatuses 20A and 20B are multifunction peripherals which individually perform plural functions such as printing, scanning, copying, and facsimile transmission (faxing). Hereinafter, the image forming apparatuses 20A and 20B are referred to as image forming apparatuses 20. It is possible to continually expand functions of the image forming apparatuses 20 by adding or updating an application program (hereinafter referred to as "application").

The apparatus managing server 10 is a computer such as a personal computer (PC) which collectively introduces licenses of applications operable in the image forming apparatus 20 within the user environment E1. Other user environments E1 may exist depending on the number of users in the enterprise or the office. Therefore, the number of the user environments E1 may be plural.

On the other hand, a maker environment E2 is a system environment on a sales side of the applications to be added to the image forming apparatuses 20. For example, the maker environment E2 may be operated by the maker of the image forming apparatuses 20. The maker environment E2 includes a license managing server 50A, a license server 50B, a package managing server 60B, and the like.

The license managing servers 50A and 50B are computers managing the licenses of the applications purchased by the users. Hereinafter, the license managing servers 50A and 50B are referred to as license managing server 50. The package managing server 60B is a computer which manages package files of applications (hereinafter, referred to as "package").

The user environment E1 and the maker environment E2 are connected via a network 70 such as the Internet.

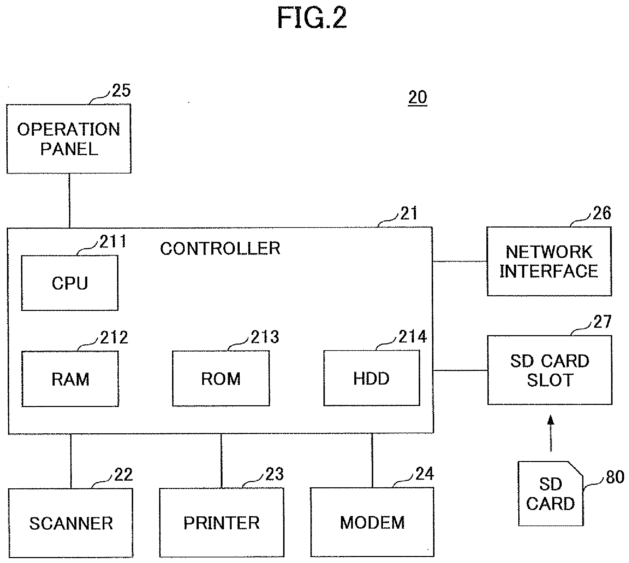

FIG. 2 illustrates the hardware configuration of the image forming apparatus of the embodiment. Referring to FIG. 2, the image forming apparatus 20 includes hardware such as a controller 21, a scanner 22, a printer 23, a modem 24, an operation panel 25, a network interface 26, and an SD card slot 27.

The controller 21 includes a CPU 211, a RAM 212, a ROM 213, an HDD 214 or the like. The ROM 213 has various programs and data used by the programs. The RAM 212 is used as a memory area for loading the program, a work area for the loaded program or the like. The CPU 211 performs various functions by processing the program loaded on the RAM 212. The HDD 214 records the programs, various data used by the programs, and the like.

The scanner is hardware for reading image data from a manuscript. The printer 23 is hardware for printing image data on a printing paper. The modem 24 is hardware for connecting the image forming apparatus 20 to a telecommunication line and is used for sending and receiving the image data with fax communication. The operation panel 25 is hardware provided with input means for receiving an input from a user and display means such as a liquid crystal panel. The network interface 26 is hardware for connecting the image forming apparatus 20 to a wired or wireless network such as a LAN. The SD card slot 27 is used to read a program recorded in an SD card 80. Said differently, not only the program recorded in the ROM 223 but also the program recorded in the SD card 80 may be loaded into the RAM 212 and executed in the image forming apparatus 20. The SD card 80 may be replaced by another recording medium. For example, the other recording media are a CD-ROM, a Universal Serial Bus (USB) memory or the like. The recording medium may be any memory. In this case, the SD card slot 17 may be replaced by hardware depending on kinds of the recording media. The image forming apparatus 20 may not be a multifunction peripheral, and may be a printer or a scanner which can realize a single function.

End parts of the reference symbols designating the apparatuses illustrated in FIG. 1 indicate license managing methods corresponding to the apparatuses. When the end part of the reference symbol is "A", the corresponding apparatus follows a license managing method of A. When the end part of the reference symbol is "B", the corresponding apparatus follows a license managing method of B. There are no substantial meanings in the license managing method A and the license managing method B themselves, and the end parts "A" and "B" specifically indicate that the license managing method A and the license managing method B are relatively different methods.

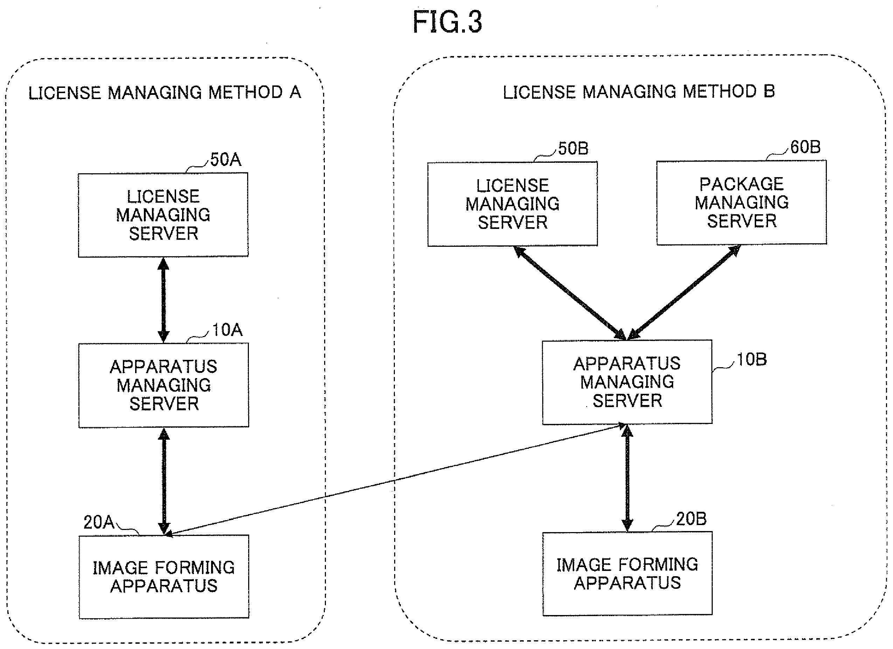

FIG.3 illustrates a relationship among various servers and apparatuses following different license managing methods. Referring to FIG. 3, the apparatus managing server 10A introduces licenses for the image forming apparatus 20A. The license managing server 50A manages the licenses for the image forming apparatus 20A.

Meanwhile, the apparatus managing server 10B carries out installation of the application and introduction of the license in the image forming apparatus 20B. The license managing server 50B manages the licenses for the image forming apparatus 20B. The package managing server 60B manages the package of the image forming apparatus 20B.

The reason why a computer managing the applications, i.e. a computer corresponding to the package managing server 60B, does not exist is that the distribution channel of the applications in the license managing method A is different from that in the license managing method B. Specifically, the application following the license managing method A is recorded in the recording medium such as the SD card 80 and distributed. It is also possible to install the application from a predetermined personal computer (PC).

In the embodiment, managing methods or modes of an application (hereinafter, referred to as application A) following the license managing method A and an application (hereinafter, referred to as application B) following the license managing method B are different. In the embodiment, the application A and the application B have different package types, namely structures of archival files of application execution modules. Hereinafter, the package type of the license managing method A is referred to as package type A, and the package type of the license managing method B is referred to as package type B.

The differences of the license managing methods are based on differences of data forms of the license data, encoding of the license files, encryption methods or the like. In this, the license file designates a file recording data proving a license (right of use) to permit using the application. It is not possible to use the application of the embodiment in the image forming apparatus 20 only by installing the application in the image forming apparatus 20. The application can be used after the license file is introduced in the image forming apparatus 20.

The license managing methods may use different communication protocols between the servers and the apparatuses used in introducing the licenses. For example, the communication protocol between the image forming apparatus 20A and the apparatus managing server 10A and the communication protocol between the image forming apparatus 20B and the apparatus managing server 10B may differ.

Therefore, the license file is not introduced from the apparatus managing server 10A to the image forming apparatus 20B. When the communication protocols are different between the license managing method A and the license managing method B, it is impossible to transfer the license file from the apparatus managing server 10A to the image forming apparatus 20B. Further, when the communication protocols are the same between the license managing method A and the license managing method B, and the same application as that in the image forming apparatus 20A is installed in the image forming apparatus 20B, it is also impossible to introduce the license file from the apparatus managing server 10A into the image forming apparatus 20B. This is because the image forming apparatus 20B cannot decode or analyze the license files based on the license managing method A.

Therefore, users use the apparatus managing server 10A when the license is introduced into the image forming apparatus 20A, and use the apparatus managing server 10B when the license is introduced into the image forming apparatus 20B. When it is unknown which license managing method the image forming apparatus 20 follows, the users cannot introduce the licenses since the users do not know whether the apparatus managing server 10 to be used for the license introduction is the apparatus managing server 10A or the apparatus managing server 10B.

In order to solve such inconvenience, the image forming apparatus 20A can follow the license managing method B in the embodiment. Specifically, the image forming apparatus 20A can decode not only the license file based on the license managing method A but also the license file based on the license managing method B. The image forming apparatus 20A can communicate to not only the apparatus managing server 10A but also the apparatus managing server 10B.

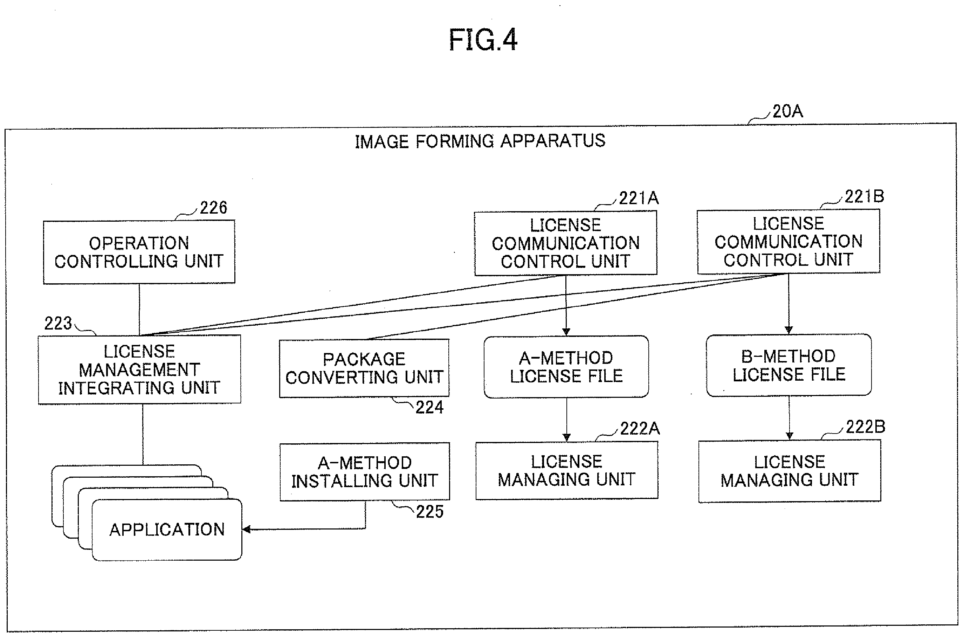

Referring to FIG. 4, an example functional configuration of the image forming apparatus 20A is described. The image forming apparatus 20A follows both of the license managing method A and the license managing method B.

Referring to FIG. 4, the image forming apparatus 20A includes a license communication control unit 221A, a license communication control unit 221B, a license managing unit 222A, a license managing unit 222B, a license management integrating unit 223, a package converting unit 224, an A-method installing unit 225, an operation controlling unit 226, and so on. These units are realized when the program installed in the image forming apparatus 20A is executed by the CPU 211. End parts "A" and "B" of the reference symbols in FIG. 4 have the same meanings as those on FIG. 1.

The license communication control unit 221A controls communications of the image forming apparatus 20A to the apparatus managing server 10A. Specifically, the license communication control unit 221A receives a setup request for requesting to introduce a license into the image forming apparatus 20A from the apparatus managing server 10A. The license communication control unit 221A stores the A-method license file which follows the license managing method A and is transferred from the apparatus managing server 10A upon a request for setting the license in a predetermined memory region of the HDD 214 or the RAM 212 (see FIG. 2).

The license communication control unit 221B controls communications of the image forming apparatus 20B to the apparatus managing server 10B. The license communication control unit 221B controls communications between the image forming apparatus 20B and the apparatus managing server 10B. Specifically, the license communication control unit 221B receives a setup request for requesting to introduce a license into the image forming apparatus 20B from the apparatus managing server 10B. The license communication control unit 221B stores the B-method license file which follows the license managing method B and is transferred from the apparatus managing server 10B upon a request for setting the license in a predetermined memory region of the HDD 214 or the RAM 212 (see FIG. 2). The license communication control unit 221B receives a request for installing the application from the apparatus managing server 10B.

The license managing server 222A introduces and sets the license corresponding to the license managing method A and determines whether the application is permitted to be invoked. When the application is invoked, the license managing unit 222A determines whether the application can be invoked based on the A-type license file.

The license managing unit 222B introduces and sets the license corresponding to the license managing method B and determines whether the application is permitted to be invoked. When the application B is invoked, the license managing unit 222B determines whether the application can be invoked based on the B-type license file.

The license management integrating unit 223 allocates requests received by the license communication control unit 221A or the license communication control unit 221B to the license managing unit 222A or the license managing unit 222B. Specifically, the request received by the license communication control unit 221A is allocated to the license managing unit 222A. Specifically, the request received by the license communication control unit 221B is allocated to the license managing unit 222B. The relationship among the license communication control units 221, the license managing methods, and the license managing units 222 may be recorded in the HDD 214. The license management integrating unit 223 requests the license managing unit 222A or the license managing unit 222B for execution of an invocation determining process corresponding to the license managing method which the application to be invoked follows in response to the request for invoking the application input from the operation controlling unit 226.

The operation controlling unit 226 initiates a process input by the user through the operation panel 25.

The A-method installing unit 225 executes an installing process which follows a remote installation of the application A. Specifically, the A-method installing unit receives an installation request for installing the application via the network and installs the application A. The package converting unit 224 converts the package type of the application B to the package type of the application B.

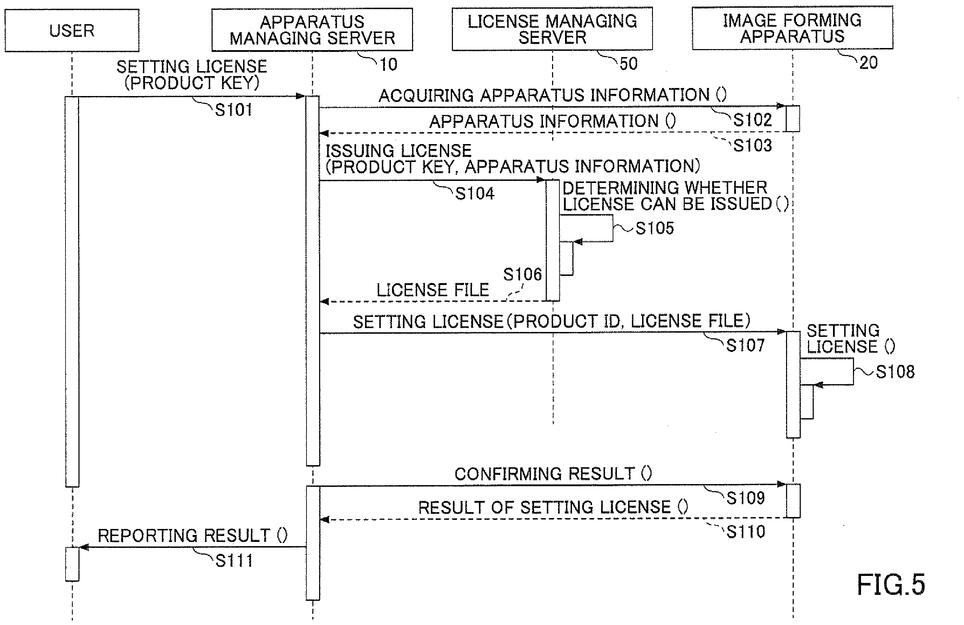

Hereinafter, a procedure in the apparatus managing system 1 is described. FIG. 5 is a sequence diagram of illustrating a procedure of setting the license in an image forming apparatus 20. In FIG. 5, the procedure carried out in common with the license managing methods is described irrespective of the license managing methods. Therefore, FIG. 5 represents both of the license managing methods A and B. However, the procedures in the license managing methods A and B are not completely the same. For example, there may be differences of the communication protocols used in the steps and of parameters among the license managing methods. The order of carrying out the steps may differ as long as contradictions are not caused.

In step 3101, a user designates an image forming apparatus in which a license is to be set by operating the apparatus managing server 10, and inputs a setting request for the license by designating a product key of the application for which a license is allowed. The product key is an identifier uniquely issued or allocated for every purchase of the applications. The product key is used as information for identifying the license (right of use) for the purchased application and information proving the authentic purchaser of the application. In step S101, it is presumed that the user has purchased the application through a predetermined Web site or in a shop and acquired the product key. However, the application is not always acquired at a time of purchasing the application. Said differently, the application itself may be downloaded using the product key.

The image forming apparatus 20 into which the application is to be installed may be designated by searching the image forming apparatuses 20 connected to the apparatus managing server 10 via the network 30, displaying the list of the searched image forming apparatuses 20, and making the user select the destination of the installation from the list. Thus, the destination of installing the application may be received. The IP address or the host name of the image forming apparatus 20 into which the application is to be installed may be directly input to designate the image forming apparatus 20.

Thereafter, the apparatus managing server 10 requests to acquire apparatus information from the image forming apparatus 20 which is designated as an object of setting the license (hereinafter, referred to as "target apparatus") in step S102. The target apparatus 20 returns the apparatus information of the target apparatus 20 to the apparatus managing server 10 in step S103. The apparatus information includes the apparatus number. The apparatus numbers are identification information for uniquely identifying the image forming apparatuses 20. List information of the applications installed in the target apparatus 20 may be included in the apparatus information.

Subsequently, the apparatus managing server 10 sends a license issue request to the license managing server 50 by designating the product key and the apparatus information in step S104.

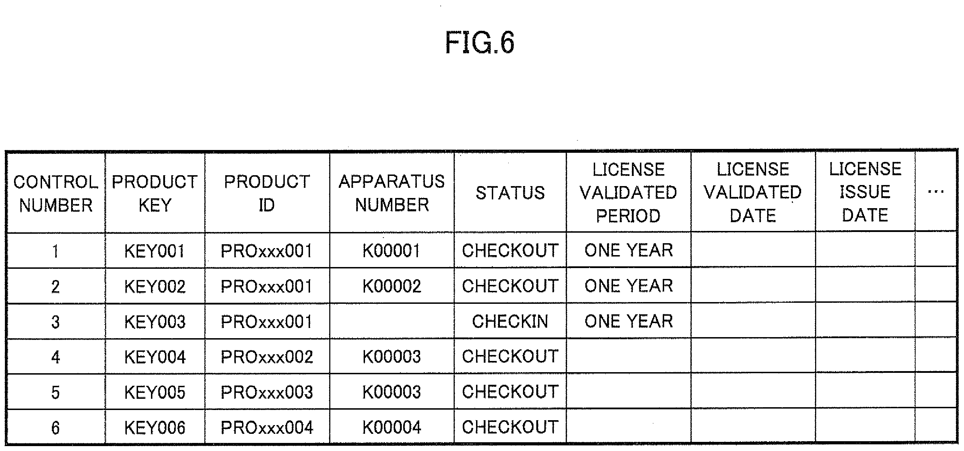

The license managing server 50 determines whether the license is to be issued in response to the license issue request in step S105. The content of whether the license can be issued may differ depending on the license managing method. For example, the license managing table illustrated in FIG. 6 is managed by the license managing server 50 to determine whether the license is to be issued based on the license managing table.

FIG. 6 illustrates a structural example of the license managing table. Referring to FIG. 6, the license managing table has items such as control number, product key, product ID, apparatus number, status, license validated period, license validated date, license issue date, and so on.

Among these items, the control numbers, the product keys, the product IDs, the statuses, the license modes, and the license validated periods are recorded in the license managing table when the applications are purchased.

Meanwhile, the apparatus numbers, the license validated dates, and the license issue dates are recorded in response to the issuance of the licenses, i.e. issuance of the license files. The values of the statuses are updated in response to the issuance of the licenses.

The control numbers are identifiers (e.g. number) uniquely allocated to the records along with generation of the records of the license managing table. The product IDs are identifiers uniquely allocated to the applications. The same product ID is allocated to products having the same application names. In the embodiment, the product ID and the product key are clearly distinguished. The product IDs are provided to distinguish products as the applications, and the product keys are provided to distinguish purchases of the products as the applications. Therefore, every time the products are purchased, different product keys are issued even though the same products are purchased. The license validated dates indicate periods while the licenses are valid.

The apparatus number of the image forming apparatus 20 is registered in the item of apparatus number of the table illustrated in FIG. 6 when the license file is issued. The item of status is information indicative of the states of the licenses. In the embodiment, the statuses indicate "no license", "check out", or "check in". The status of "no license" indicates that no license is issued. The status of "checkout" indicates that the license has been issued. The status of "checkin" indicates that the license has been returned and is usable. The validated date indicates the validated date of the license file calculated based on the license validated period when the license file has been issued. The license issue date is the issue date of the license file which is registered when the license file is issued.

If the above-mentioned license managing table is used, and the record including the received product key is registered in the license managing table, the status of the record including the product key (hereinafter, referred to as "target record") is not checkout, and the license validated date of the record including the product key does not exceed the present time or the value of the license validated date is not registered, the license managing server 50 may determine that the product key is valid. If not, the product key may be determined to be invalid.

When the product key is determined invalid, the license managing server 50 returns error information indicating that the product key is invalid to the apparatus managing server 10. In this case, the apparatus managing server 10 makes the error information display on its display device and makes setting of the license stop.

When the product key is determined to be valid, the license managing server 50 updates the target record in the product managing table and generates the license file. Said differently, the received apparatus number is recorded in the target record, the status of the target record is indicated as "checkout". Further, a value obtained by adding the present time to the license validated period of the target record is recorded in the license validated date of the target record. Further, the present year, month and date are recorded in the license issue date of the target record. When the target record is updated, the license file, which is issued to the same product key and lasts a period more than the license validated period, is prevented from being issued.

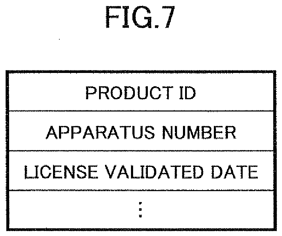

The license file may be generated as illustrated in FIG. 7. FIG. 7 illustrates a structural example of the license file. Referring to FIG. 7, the license file includes the product ID, the apparatus number, and the license validated period. The product ID is that of the application to which the license is given to enable using the application by the license file. The application number is that of the image forming apparatus 20 which is permitted to use the application corresponding to the product ID by the license file. The license validated date of the license file is given by the license file.

The product ID of the license file corresponds to the product ID of the target record included in a request for issuing the license. The apparatus number included in the license issue request is registered as the apparatus number of the license file. The license validated date of the license file is the same as the license validated date registered in the target record.

The license file illustrated in FIG. 7 is an example. The structure of the license file may differ depending on the license managing methods.

Next, the license managing server 50 returns the generated license file to the apparatus managing server 10 in step S106. The license file is encrypted or encoded before sending to the apparatus managing server 10 in order to avoid falsification.

Then, the apparatus managing server 10 sends the product ID of the application to which the license is set and the license file to the target apparatus 20 to request for setting the license in the target apparatus 20 in step S107. The target apparatus 20 carries out the setting of the license in response to the request for setting the license in step S108. The product ID may be extracted by the apparatus managing server 10 from the license file. In this case, the apparatus managing server 10 decrypts or decodes the encrypted or encoded license file with the corresponding encrypted or encoded method adopted by the license managing method which the apparatus managing server 10 follows.

Thereafter, the apparatus managing server 10 inquires the target apparatus 20 of a result of license setting in step S109. The target apparatus 20 returns the result of license setting in response to the inquiry in step S110. The apparatus managing server 10 makes the display device display information indicative of the result of license setting upon receipt of the result of license setting in step S111.

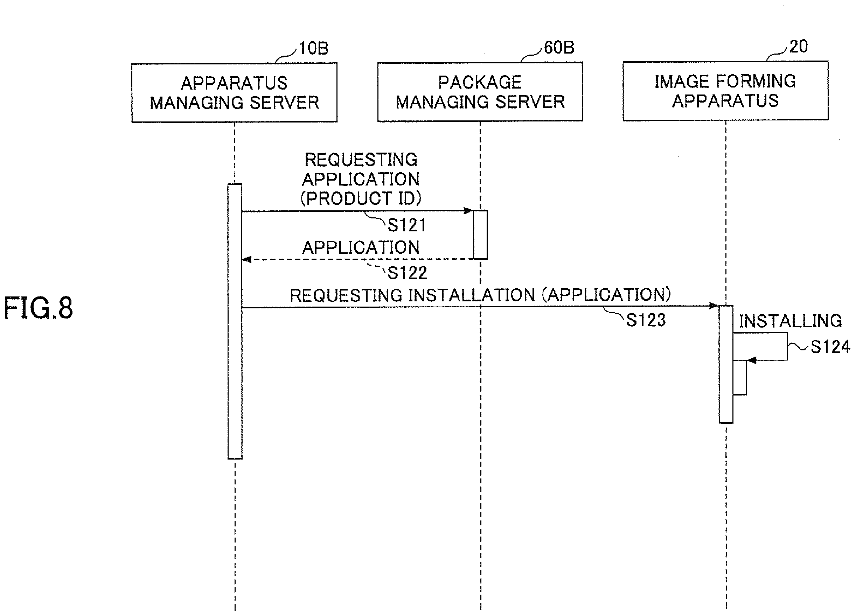

In the case of the license managing method B, the installing process illustrated in FIG. 8 is carried out during the processes illustrated in FIG. 5.

FIG. 8 is a sequence diagram of installing the application with the license managing method B. Referring to FIG. 8, the apparatus managing server 10 is limited to the apparatus managing server 10B since the license managing method B is employed. The process illustrated in FIG. 8 may be carried out at an arbitrary timing during the processes illustrated in FIG. 5. The process of FIG. 8 may be carried out between steps S103 and S104, or after step S110.

In step S121, the apparatus managing server 10B sends a download request for the application B to the package managing server 60B by designating the product ID. When step S121 is carried out before the license file is acquired, the apparatus managing server 10B may query the license managing server 50 of the product ID corresponding to the product key before step S121. When step S121 is carried out after the license file is acquired, the product ID included in the license file may be designated in step S121.

Thereafter, the package managing server 60B returns the package of the application B which follows the product ID to the apparatus managing server 10B in step S122. Thereafter, the apparatus managing server 10B sends the installation request of the acquired application B to the target apparatus 20 in step S123. The target apparatus 20 carries out the installation request of the application B which is received along with the installation request in step S124.

Next, step S124 carried out by the image forming apparatus 20A in FIG. 8 is described in detail.

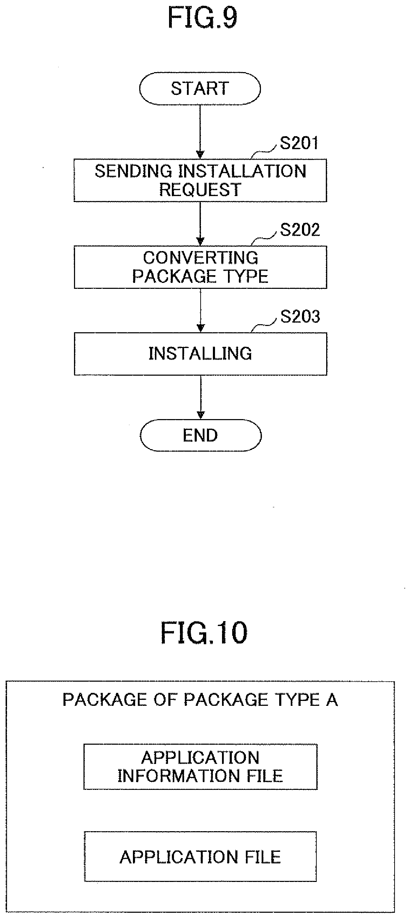

FIG. 9 is a flow chart of installing the application B in the image forming apparatus 20A.

The installation request of the application B from the apparatus managing server 10B is received by the license communication control unit 221B in step S201. This is because the license communication control unit 221A and the license communication control unit 221B open their ports having different port numbers, and the apparatus managing servers 10A and 10B know the corresponding port numbers. The license communication control unit 221B outputs the application B received along with the installation request to the package converting unit 224.

The package converting unit 224 converts the package type of the application B to the package type A in step S202. As described above, the differences of the license managing methods are based on differences of data forms of the license data, encoding of the license files, encryption methods or the like. Therefore, the package types differ in data forms of the license data, encoding of the license files, encryption methods or the like.

FIG. 10 illustrates a structural example of the package type A. Referring to FIG. 10, the package (archival file) of the package type A includes the application information file, the application file, and the like.

The application file is an executable code of the application. The application information file records attribute information of the application.

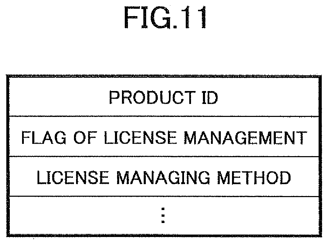

FIG. 11 illustrates a structural example of an application information file. Referring to FIG. 11, the application information file records information indicative of the product ID, the flag of license management, and the license managing method. The flag of license management is information indicative of whether the application is under the license management. If the application is under the license management, the flag of license management is true. If not, the flag of license management is false. In the embodiment, the license managing methods A and B are exemplified. Especially, in both of the license managing methods, there are applications of free software which can be used without acquiring the licenses. The flag of license management is indicated as "false" as to the application of the free software.

As to the conversion, the package converting unit 224 converts the package type of the application B to the package type A illustrated in FIG. 10. Referring to FIG. 10, the application information file is generated when necessary. How to acquire the information recorded in the application information file differs depending on the package types of the application. When a file corresponding to the application information is included in the application B, the application information may be extracted from the file. The value of the license managing method of the application information file may designate the license managing method B. When the package type is converted to the application A, the application is originally the application B related to the license method B.

The package converting unit 224 inputs the converted application B of which package type has been converted as described above into the A-method installing unit 225 with a remote installation via the network based on the communication interface of the A-method installing unit 225.

Thereafter, the A-method installing unit 225 carries out the installation of the converted application B which has been converted to the package type A in step S203. The A-method installing unit 225 updates application management information during the installation. The application management information may be a list of the product IDs and the destinations for installing the applications. The application management information is recorded in the HDD 214.

When the application B is installed, the package type is converted to the package type A and the converted application is installed. On the other hand, the installation request for the application A is directly input in the A-method installing unit 225. The package type A is installed without converting the package type. Therefore, the application installed in the image forming apparatus 20A is managed as the package type A irrespective of the original package types of A or B. Said differently, the application information file and the application file are associated and managed.

Next, step S108 carried out by the image forming apparatus 20A in FIG. 5 is described in detail.

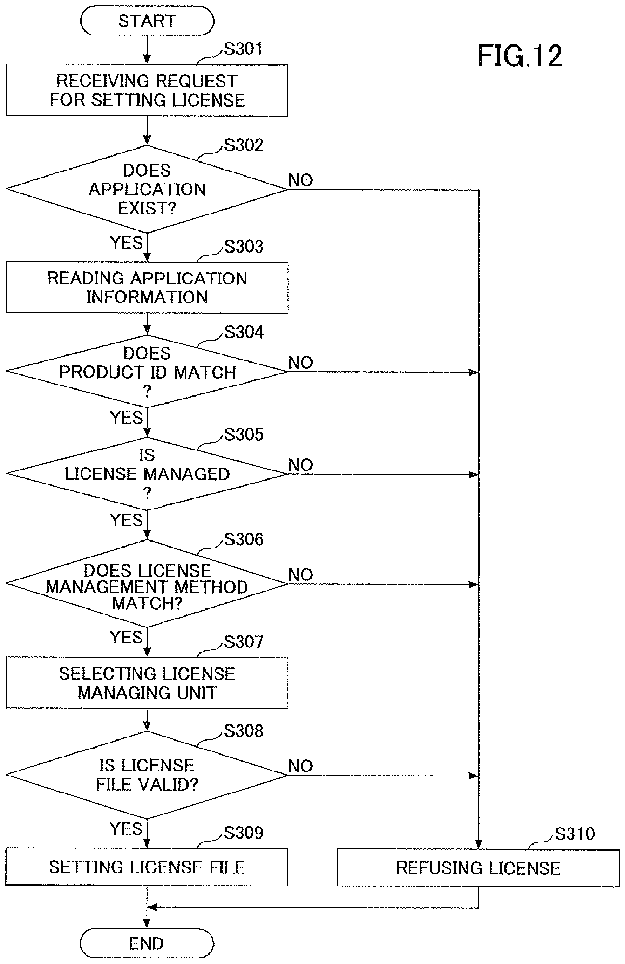

FIG. 12 is a flow chart for setting the license in the image forming apparatus 20A.

The request for setting the license from the apparatus managing server 10A or 10B to the image forming apparatus 20 is received by the license communication control unit 221A or the license communication control unit 221B in step S301. The request for setting the license from the apparatus managing server 10A is received by the license communication control unit 221A of the image forming apparatus 20A. The request for setting the license from the apparatus managing server 10B is received by the license communication control unit 221B of the image forming apparatus 20A.

The license communication control unit 221A or 221B which has received the request for setting the license processes the license file received by the request for setting the license with the license communication control unit 221A or 221B using the corresponding license managing method. The license file may be recorded in a predetermined memory region of the HDD 214. The license file may be recorded in a predetermined memory region of the RAM 212. The license communication control unit 221A or 221B requests the license management integrating unit 223 to set the license. At this time, the license communication control unit 221A or 221B reports the identifier of the license communication control unit 221A or 221B, information for identifying the license managing method of the license file which is to be processed, and the product ID received in accordance with the request for setting the license to the license management integrating unit 223.

Next, license management integrating unit 223 determines whether the application (hereinafter, referred to as "target application") corresponding to the target product ID is installed in the image forming apparatus 20A based on the application management information in step S302. When the target application is installed in YES of step S302, the license management integrating unit 223 reads the application information file corresponding to the target application in step S303.

Next, the license management integrating unit 223 compares the target product ID with the product ID recorded in the application information file. When the product IDs match in YES of step S304, the license management integrating unit 223 determines whether the license of target application is managed based on the flag of license management is step S305. When the license of the target application is managed in YES of step S305, namely the flag of license management is true, the license management integrating unit 223 determines the value of the license managing method of the target application matches the identifier of the license communication control unit 221A or 221B from which the license is requested to set in step S306. Matching of the identifiers is realized when the name of the license managing method of the application information file has a part like "A" or "B" common to a part of the identifiers of the license communication control unit 221A or 221B from which the license is requested to set.

When the identifiers match as described above in YES of step S306, the license management integrating unit 223 selects the license managing unit 222A or 222B which corresponds to the license managing method of the target application to make the license managing unit 222A or 222B set the license in step S307. The license management integrating unit 223 requests the selected license managing unit 222A or 222B to set the license.

The license managing unit 222A or 222B in which the license is requested to be set decrypts or decodes the license file recorded in the predetermined memory region, reads the decrypted or decoded license file, and determines whether the license file is effective in step S308. For example, it is confirmed whether the license validated date ends. It is different for each license managing method or for each license managing unit 222A or 222B which memory region the license file is read from, how the license file is decrypted or decoded, how the validity is determined, and so on.

When the license file is valid in YES of step S308, the license managing unit 222 sets the license in the target application in step S309. Specific processes of setting the license differ for each license managing method or for each license managing unit 222A or 222B. However, the license managing methods are common in being able to use the information recorded in the license files or the license files. For example, the license file to be processed may be stored in the memory region in which the license file used for checking the license is stored, or the content recorded in the license file is copied to a predetermined table.

On the other hand, in NO respectively of steps S302, S304, S305, S306 or S308, the license management integrating unit 223 or the selected license managing unit 222A or 222B stops setting the license in step S310. Therefore, the license file does not become usable.

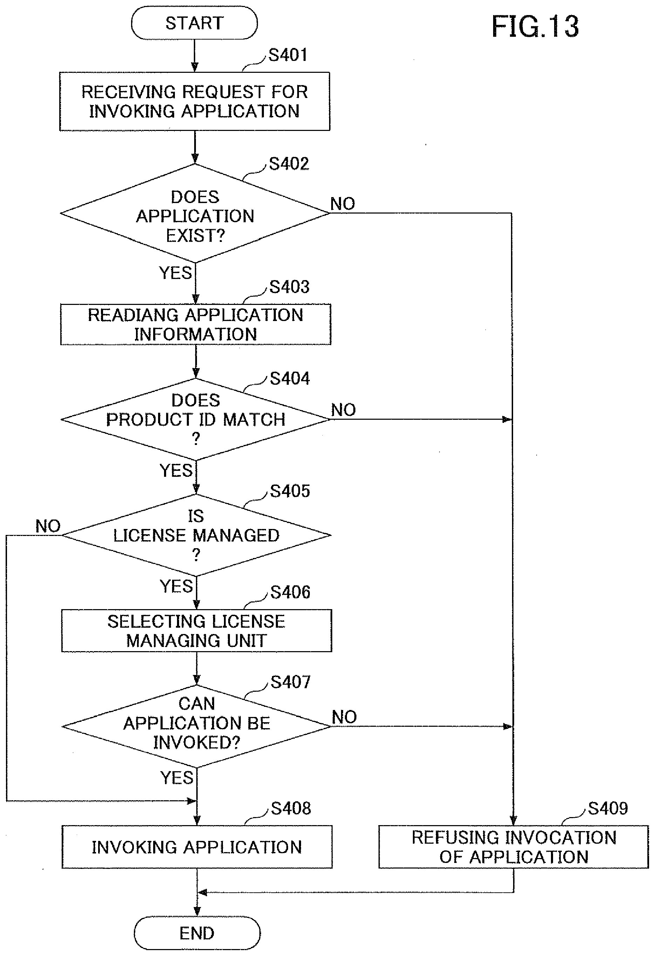

Next, how the application is invoked is described. FIG. 13 is a flow chart for invoking the application in the image forming apparatus 20A.

The operation controlling unit 226 receives a request for invoking the application through a screen displayed on the operation panel 25 in step S401. The screen may be a list of the applications installed in the image forming apparatus 20. The operation controlling unit 226 designates the product ID (hereinafter, referred to as "target product ID") of the application which is to be invoked, and requests the license management integrating unit 223 to invoke the application.

The license management integrating unit 223 determines whether the application (hereinafter, referred to as "target application") corresponding to the target product ID is installed based on the application management information in step S402. When the target application is installed in YES of step S402, the license management integrating unit 223 reads the application information file corresponding to the target application in step S403.

Next, the license management integrating unit 223 compares the target product ID with the product ID recorded in the application information file in step S404. When the both of the product IDs match in YES of step S404, the license management integrating unit 223 determines whether the license of target application is managed based on the flag of license management of the application information file in step S405.

When the license of the target application is managed in YES of step S405, namely the flag of license management is "true", the license management integrating unit 223 selects the license managing unit 222A or 222B corresponding to the license managing method of the target application to make the license managing unit 222A or 222B determine whether the target application is invoked in step S406. The license management integrating unit 223 requests the selected license managing unit 222A or 222B to determine whether the target application is invoked by designating the target product ID.

The license managing unit 222A or 222B which receives the request for determining whether the application is invoked determines whether the target application is invoked with the process corresponding to the license managing method corresponding to the license managing unit 222A or 222B in step S407. For example, it is confirmed whether the license file corresponding to the designated product ID exists or whether the license validated date expires.

When the license managing unit 222 determines that the application can be invoked, the license management integrating unit 223 invokes the target application in step S408.

On the other hand, in NO of step S402, NO of step S404, and NO of step S407, the invocation of the target application is refused in step S409.

As described, the image forming apparatus 20A of the embodiment can install both of the applications A and B and set the licenses of both of the applications A and B. Therefore, in reference to FIG. 1, the licenses for the image forming apparatus 20A can be managed by the apparatus managing server 10B, the license managing server 50B, and the package managing server 60B even though the apparatus managing server 10A and the license managing server 50A do not exist as the components of the apparatus managing system 1. This means that the licenses can be totally managed for the image forming apparatuses 20A and 20B which follow the different license managing methods. Therefore, the licenses can be simply managed in an environment in which image forming apparatuses following plural license managing methods exist.

In the embodiment, there has been described an example in which the two license managing methods exist for easiness of the explanation. However, the number of the license managing methods may be three or more.

This patent application is based on Japanese Priority Patent Application No. 2009-203929 filed on September 3, 2009.

## Claims

1. An image forming apparatus (20A, 20B) comprising:
a plurality of license communication control units (221A, 221B) configured to receive, from an apparatus managing server (10A, 10B), license data;
a plurality of license managing units (222A, 222B), each of the plurality of license managing units (222A, 222B) being configured to decode the license data according to each a different predetermined license managing method (A, B) and set a license for invoking an application which is associated with the predetermined license management method (A, B) by enabling to use the license data; and
a license management integrating unit (223) configured to select one of the plurality of license managing units (222A, 222B) by determining the license managing unit (222A, 222B) which is configured to decode the license data according to a license managing method (A, B) with which an application to be invoked is associated,
wherein the license management integrating unit selects one of the plurality of license communication control units corresponding to attribute information of a program to be invoked, and
the one of the plurality of license communication control units determines whether the program can be invoked based on the license data corresponding to the program to be invoked,
the image forming apparatus (20A, 20B) further comprising
an installing unit configured to install the program in response to a first installation request for installing the program having a first package type; and
a package converting unit configured to convert a package type of the program from a second package type to the first package type in response to a second installation request for installing the program having the second package type and input the first installation request for installing the program of the converted first package type into the installing unit,
wherein
the first package type includes an application file which is an executable code of the program and an application information file in which attribute information of the program is recorded; and
the package converting unit extracts the attribute information from the second package type, when a file corresponding to the application information file of the first package type is included in the second package type and generates an application information file for the second package type.

2. A license managing method carried out by an image forming apparatus (20A, 20B) comprising:
receiving, from an apparatus managing server (10A, 10B) license data;
decoding, by a license managing unit (222A, 222B) out of a plurality of license managing units (222A, 222B), the license data according to each a different predetermined license managing method (A, B);
setting a license for invoking an application which is associated with the predetermined license management method (A, B) by enabling to use the license data; and
selecting one of the plurality of license managing units (222A, 222B) by determining the license managing unit (222A, 222B) which is configured to decode the license data according to a license managing method (A, B) with which an application to be invoked is associated,
determining whether the program can be invoked based on the license data corresponding to the program to be invoked,
installing the program in response to a first installation request for installing the program having a first package type; and
converting, by a package converting unit, a package type of the program from a second package type to the first package type in response to a second installation request for installing the program having the second package type; and
issuing the first installation request for installing the program of the converted first package type for the installing of the program,
wherein
the first package type includes an application file which is an executable code of the program and an application information file in which attribute information of the program is recorded; and
the package converting unit extracts the attribute information from the second package type, when a file corresponding to the application information file of the first package type is included in the second package type and generates an application information file for the second package type.

3. A computer readable recording medium embodied with a license processing program representing a sequence of instruction, which when executed by a computer included in an image forming apparatus (20A, 20B), the instructions cause the computer to function as:
a plurality of license communication control units (221A, 221B) configured to receive, from an apparatus managing server (10A, 10B),
a plurality of license managing units (222A, 222B), each of the plurality of license managing units (222A, 222B) being configured to decode the license data according to each a different predetermined license managing method (A, B) and set a license for invoking an application which is associated with the predetermined license management method (A, B) by enabling to use the license data; and
a license management integrating unit (223) configured to select one of the plurality of license managing units(222A, 222B) which is configured to decode the license data according to a license managing method (A, B) with which an application to be invoked is associated,
wherein the license management integrating unit selects the one of the plurality of license communication control units corresponding to an attribute information of a program to be invoked, and
the one of the plurality of license communication control units determines whether the program can be invoked based on the license data corresponding to the program to be invoked,
the computer readable recording medium further comprising instruction for causing the computer to function as
an installing unit configured to install the program in response to a first installation request for installing the program having a first package type; and
a package converting unit configured to convert a package type of the program from a second package type to the first package type in response to a second installation request for installing the program having the second package type and input the first installation request for installing the program of the converted first package type into the installing unit,
wherein
the first package type includes an application file which is an executable code of the program and an application information file in which attribute information of the program is recorded; and
the package converting unit extracts the attribute information from the second package type, when a file corresponding to the application information file of the first package type is included in the second package type and generates an application information file for the second package type.

## Patentansprüche

1. Bilderzeugungsvorrichtung (20A, 20B), umfassend:
eine Vielzahl von Lizenzkommunikationssteuereinheiten (221A, 221B), die konfiguriert sind, um Lizenzdaten von einem Vorrichtungsverwaltungsserver (10A, 10B) zu empfangen;
eine Vielzahl von Lizenzverwaltungseinheiten (222A, 222B), wobei jede der Vielzahl von Lizenzverwaltungseinheiten (222A, 222B) konfiguriert ist, um die Lizenzdaten gemäß jedem eines unterschiedlichen vorbestimmten Lizenzverwaltungsverfahren (A, B) zu dekodieren und eine Lizenz zum Aufrufen einer Anwendung einzustellen, die dem vorbestimmten Lizenzverwaltungsverfahren (A, B) zugeordnet ist, durch Ermöglichen, die Lizenzdaten zu verwenden; und
eine Lizenzverwaltungsintegriereinheit (223), die konfiguriert ist, um eine aus der Vielzahl von Lizenzverwaltungseinheiten (222A, 222B) auszuwählen, durch Bestimmen der Lizenzverwaltungseinheit (222A, 222B), die konfiguriert ist, um die Lizenzdaten gemäß einem Lizenzverwaltungsverfahren (A, B) zu dekodieren, denen eine Anwendung, die aufgerufen werden soll zugeordnet ist,
wobei die Lizenzverwaltungsintegriereinheit eine aus der Vielzahl von Lizenzkommunikationssteuereinheiten entsprechend Attributinformationen eines Programms, das aufgerufen werden soll, auswählt und
die eine aus der Vielzahl von Lizenzkommunikationssteuereinheiten bestimmt, ob das Programm aufgerufen werden kann, basierend auf den Lizenzdaten entsprechend dem Programm, das aufgerufen werden soll,
wobei die Bilderzeugungsvorrichtung (20A, 20B) ferner Folgendes umfasst
eine Installationseinheit, die konfiguriert ist, um das Programm als Reaktion auf eine erste Installationsanfrage zum Installieren des Programms mit einem ersten Pakettyp zu installieren; und
eine Paketkonvertierungseinheit, die konfiguriert ist, um einen Pakettyp des Programms von einem zweiten Pakettyp zu dem ersten Pakettyp als Reaktion auf eine zweite Installationsanfrage zum Installieren des Programms mit dem zweiten Pakettyp zu konvertieren und die erste Installationsanfrage zum Installieren des Programms des konvertierten ersten Pakettyps in die Installationseinheit einzugeben,
wobei
der erste Pakettyp eine Anwendungsdatei, die ein ausführbarer Code des Programms ist, und eine Anwendungsinformationsdatei beinhaltet, in der Attributinformationen des Programms aufgezeichnet sind; und
die Paketkonvertierungseinheit die Attributinformationen von dem zweiten Pakettyp extrahiert, wenn eine Datei entsprechend der Anwendungsinformationsdatei des ersten Pakettyps in dem zweiten Pakettyp beinhaltet ist, und eine Anwendungsinformationsdatei für den zweiten Pakettyp erzeugt.

2. Lizenzverwaltungsverfahren, ausgeführt durch eine Bilderzeugungsvorrichtung (20A, 20B), umfassend:
Empfangen, von einem Vorrichtungsverwaltungsserver (10A, 10B), von Lizenzdaten;
Dekodieren, durch eine Lizenzverwaltungseinheit (222A, 222B), aus einer Vielzahl von Lizenzverwaltungseinheiten (222A, 222B), der Lizenzdaten gemäß jedem einem unterschiedlichen vorbestimmten Lizenzverwaltungsverfahren (A, B);
Einstellen einer Lizenz zum Aufrufen einer Anwendung, die dem vorbestimmten Lizenzverwaltungsverfahren (A, B) zugeordnet ist, durch Ermöglichen, die Lizenzdaten zu verwenden; und
Auswählen einer aus der Vielzahl von Lizenzverwaltungseinheiten (222A, 222B) durch Bestimmen der Lizenzverwaltungseinheit (222A, 222B), die konfiguriert ist, um die Lizenzdaten gemäß einem Lizenzverwaltungsverfahren (A, B) zu dekodieren, denen eine Anwendung, die aufgerufen werden soll, zugeordnet ist,
Bestimmen, ob das Programm aufgerufen werden kann, basierend auf den Lizenzdaten entsprechend dem Programm, das aufgerufen werden soll,
Installieren des Programms als Reaktion auf eine erste Installationsanfrage zum Installieren des Programms mit dem ersten Pakettyp; und
Konvertieren, durch eine Paketkonvertierungseinheit, eines Pakettyps des Programms von einem zweiten Pakettyp zu dem ersten Pakettyp als Reaktion auf eine zweite Installationsanfrage zum Installieren des Programms mit dem zweiten Pakettyp; und
Ausstellen der ersten Installationsanfrage zum Installieren des Programms des konvertierten ersten Pakettyps für die Installation des Programms,
wobei
der erste Pakettyp eine Anwendungsdatei, die ein ausführbarer Code des Programms ist, und eine Anwendungsinformationsdatei beinhaltet, in der Attributinformationen des Programms aufgezeichnet sind; und
die Paketkonvertierungseinheit die Attributinformationen von dem zweiten Pakettyp extrahiert, wenn eine Datei entsprechend der Anwendungsinformationsdatei des ersten Pakettyps in dem zweiten Pakettyp beinhaltet ist, und eine Anwendungsinformationsdatei für den zweiten Pakettyp erzeugt.

3. Computerlesbares Aufzeichnungsmedium, das mit einem Lizenzverarbeitungsprogramm ausgestattet ist, das einer Folge von Befehlen darstellt, die, wenn sie durch einen Computer ausgeführt werden, der in einer Bilderzeugungsvorrichtung (20A, 20B) beinhaltet ist, die Befehle verursachen, dass der Computer als Folgendes funktioniert:
eine Vielzahl von Lizenzkommunikationssteuereinheiten (221A, 221B), die konfiguriert sind, um von einem Vorrichtungsverwaltungsserver (10A, 10B) Folgendes zu empfangen
eine Vielzahl von Lizenzverwaltungseinheiten (222A, 222B), wobei jede der Vielzahl von Lizenzverwaltungseinheiten (222A, 222B) konfiguriert ist, um die Lizenzdaten gemäß jedem eines unterschiedlichen vorbestimmten Lizenzverwaltungsverfahren (A, B) zu dekodieren und eine Lizenz zum Aufrufen einer Anwendung einzustellen, die dem vorbestimmten Lizenzverwaltungsverfahren (A, B) zugeordnet ist, durch Ermöglichen, die Lizenzdaten zu verwenden; und
eine Lizenzverwaltungsintegriereinheit (223), die konfiguriert ist, um eine aus der Vielzahl von Lizenzverwaltungseinheiten (222A, 222B) auszuwählen, die konfiguriert ist, um die Lizenzdaten gemäß einem Lizenzverwaltungsverfahren (A, B) zu dekodieren, denen eine Anwendung, die aufgerufen werden soll zugeordnet ist,
wobei die Lizenzverwaltungsintegriereinheit die eine aus der Vielzahl von Lizenzkommunikationssteuereinheiten entsprechend Attributinformationen eines Programms, das aufgerufen werden soll, auswählt und
die eine aus der Vielzahl von Lizenzkommunikationssteuereinheiten bestimmt, ob das Programm aufgerufen werden kann, basierend auf den Lizenzdaten entsprechend dem Programm, das aufgerufen werden soll,
wobei das computerlesbare Aufzeichnungsmedium ferner einen Befehl zum Verursachen umfasst, dass der Computer als Folgendes funktioniert
eine Installationseinheit, die konfiguriert ist, um das Programm als Reaktion auf eine erste Installationsanfrage zum Installieren des Programms mit einem ersten Pakettyp zu installieren; und
eine Paketkonvertierungseinheit, die konfiguriert ist, um einen Pakettyp des Programms von einem zweiten Pakettyp zu dem ersten Pakettyp als Reaktion auf eine zweite Installationsanfrage zum Installieren des Programms mit dem zweiten Pakettyp zu konvertieren und die erste Installationsanfrage zum Installieren des Programms des konvertierten ersten Pakettyps in die Installationseinheit einzugeben,
wobei
der erste Pakettyp eine Anwendungsdatei, die ein ausführbarer Code des Programms ist, und eine Anwendungsinformationsdatei beinhaltet, in der Attributinformationen des Programms aufgezeichnet sind; und
die Paketkonvertierungseinheit die Attributinformationen von dem zweiten Pakettyp extrahiert, wenn eine Datei entsprechend der Anwendungsinformationsdatei des ersten Pakettyps in dem zweiten Pakettyp beinhaltet ist, und eine Anwendungsinformationsdatei für den zweiten Pakettyp erzeugt.

## Revendications

1. Appareil de formation d'image (20A, 20B) comprenant :
une pluralité d'unités de commande de communication à licence (221A, 221B) configurées pour recevoir, à partir d'un serveur de gestion d'appareil (10A, 10B), des données de licence ;
une pluralité d'unités de gestion de licence (222A, 222B), chacune de la pluralité d'unités de gestion de licence (222A, 222B) étant configurée pour décoder les données de licence, chacune selon un procédé de gestion de licence prédéterminé différent (A, B), et régler une licence pour appeler une application qui est associée au procédé de gestion de licence prédéterminé (A, B) en permettant d'utiliser les données de licence ; et
une unité d'intégration de gestion de licence (223) configurée pour sélectionner une de la pluralité d'unités de gestion de licence (222A, 222B) en déterminant l'unité de gestion de licence (222A, 222B) qui est configurée pour décoder les données de licence selon un procédé de gestion de licence (A, B) auquel une application destinée à être appelée est associée,
dans lequel l'unité d'intégration de gestion de licence sélectionne une de la pluralité d'unités de commande de communication à licence correspondant à des informations d'attribut d'un programme destiné à être appelé, et
l'une de la pluralité d'unités de commande de communication à licence détermine le fait que le programme peut, ou ne peut pas, être appelé sur la base des données de licence correspondant au programme destiné à être appelé,
l'appareil de formation d'image (20A, 20B) comprenant en outre
une unité d'installation configurée pour installer le programme en réponse à une première demande d'installation pour installer le programme ayant un premier type de progiciel ; et
une unité de conversion de progiciel configurée pour convertir un type de progiciel du programme, d'un second type de progiciel en premier type de progiciel, en réponse à une seconde demande d'installation pour installer le programme ayant le second type de progiciel, et entrer la première demande d'installation pour installer le programme du premier type de progiciel converti dans l'unité d'installation,
dans lequel
le premier type de progiciel inclut un fichier d'application, qui est un code exécutable du programme, et un fichier d'informations d'application, dans lequel des informations d'attribut du programme sont enregistrées ; et
l'unité de conversion de progiciel extrait les informations d'attribut à partir du second type de progiciel, lorsqu'un fichier correspondant au fichier d'informations d'application du premier type de progiciel est inclus dans le second type de progiciel, et génère un fichier d'informations d'application pour le second type de progiciel.

2. Procédé de gestion de licence réalisé par un appareil de formation d'image (20A, 20B) comprenant :
la réception, à partir d'un serveur de gestion d'appareil (10A, 10B), de données de licence ;
le décodage, par une unité de gestion de licence (222A, 222B) parmi une pluralité d'unités de gestion de licence (222A, 222B), des données de licence, chacune selon un procédé de gestion de licence prédéterminé différent (A, B) ;
le réglage d'une licence pour appeler une application qui est associée au procédé de gestion de licence prédéterminé (A, B) en permettant d'utiliser les données de licence ; et
la sélection d'une de la pluralité d'unités de gestion de licence (222A, 222B) en déterminant l'unité de gestion de licence (222A, 222B) qui est configurée pour décoder les données de licence selon un procédé de gestion de licence (A, B) auquel une application destinée à être appelée est associée,
la détermination du fait que le programme peut, ou ne peut pas, être appelé sur la base des données de licence correspondant au programme destiné à être appelé,
l'installation du programme en réponse à une première demande d'installation pour installer le programme ayant un premier type de progiciel ; et
la conversion, par une unité de conversion de progiciel, d'un type de progiciel du programme, d'un second type de progiciel en premier type de progiciel, en réponse à une seconde demande d'installation pour installer le programme ayant le second type de progiciel ; et
l'émission de la première demande d'installation pour installer le programme du premier type de progiciel converti pour l'installation du programme,
dans lequel
le premier type de progiciel inclut un fichier d'application, qui est un code exécutable du programme, et un fichier d'informations d'application, dans lequel des informations d'attribut du programme sont enregistrées ; et
l'unité de conversion de progiciel extrait les informations d'attribut à partir du second type de progiciel, lorsqu'un fichier correspondant au fichier d'informations d'application du premier type de progiciel est inclus dans le second type de progiciel, et génère un fichier d'informations d'application pour le second type de progiciel.

3. Support d'enregistrement lisible par ordinateur mis en œuvre avec un programme de traitement de licence représentant une séquence d'instruction, qui lorsqu'elles sont exécutées par un ordinateur inclus dans un appareil de formation d'image (20A, 20B), les instructions font en sorte que l'ordinateur serve de :
une pluralité d'unités de commande de communication à licence (221A, 221B) configurées pour recevoir, à partir d'un serveur de gestion d'appareil (10A, 10B),
une pluralité d'unités de gestion de licence (222A, 222B), chacune de la pluralité d'unités de gestion de licence (222A, 222B) étant configurée pour décoder les données de licence, chacune selon un procédé de gestion de licence prédéterminé différent (A, B), et régler une licence pour appeler une application qui est associée au procédé de gestion de licence prédéterminé (A, B) en permettant d'utiliser les données de licence ; et
une unité d'intégration de gestion de licence (223) configurée pour sélectionner une de la pluralité d'unités de gestion de licence (222A, 222B) qui est configurée pour décoder les données de licence selon un procédé de gestion de licence (A, B) auquel une application destinée à être appelée est associée,
dans lequel l'unité d'intégration de gestion de licence sélectionne l'une de la pluralité d'unités de commande de communication à licence correspondant à des informations d'attribut d'un programme destiné à être appelé, et
l'une de la pluralité d'unités de commande de communication à licence détermine le fait que le programme peut, ou ne peut pas, être appelé sur la base des données de licence correspondant au programme destiné à être appelé,
le support d'enregistrement lisible par ordinateur comprenant en outre une instruction pour faire en sorte que l'ordinateur serve de
une unité d'installation configurée pour installer le programme en réponse à une première demande d'installation pour installer le programme ayant un premier type de progiciel ; et
une unité de conversion de progiciel configurée pour convertir un type de progiciel du programme, d'un second type de progiciel en premier type de progiciel, en réponse à une seconde demande d'installation pour installer le programme ayant le second type de progiciel, et entrer la première demande d'installation pour installer le programme du premier type de progiciel converti dans l'unité d'installation,
dans lequel
le premier type de progiciel inclut un fichier d'application, qui est un code exécutable du programme, et un fichier d'informations d'application, dans lequel des informations d'attribut du programme sont enregistrées ; et
l'unité de conversion de progiciel extrait les informations d'attribut à partir du second type de progiciel, lorsqu'un fichier correspondant au fichier d'informations d'application du premier type de progiciel est inclus dans le second type de progiciel, et génère un fichier d'informations d'application pour le second type de progiciel.
